# EUROPEAN PATENT SPECIFICATION

(11) **EP 2 887 563 B1**
(45) Date of publication and mention of the grant of the patent: **28.11.2018**
(21) Application number: 13306742.1
(22) Date of filing: 17.12.2013
(51) Int. Cl.: H04B 7/155

(54) **Methods and devices for improved transmission in relay systems**
Verfahren und Vorrichtungen zur verbesserten Übertragung in Relaissystemen
Procédés et dispositifs pour transmission améliorée dans des systèmes de relais

(43) Date of publication of application: 24.06.2015
(73) Proprietor: Alcatel Lucent, 91620 Nozay (FR)
(72) Inventor: Gacanin, Haris, 2018 Antwerp (BE)
(74) Representative: Nokia EPO representatives

(56) References cited:
- WO-A1-2012/155294
- US-A1- 2009 252 146
- US-A1- 2010 098 045
- US-A1- 2011 110 288

## Description

### Field of the invention

Embodiments of the invention relate to the field of transmission by intermediate nodes, in particular relay devices. More in particular, embodiments of the invention relate to methods and devices for use in the transmission of signals between at least one first node and at least one second node via at least one intermediate node, the transmission method in general, the encompassing system, parts of the methods executed on said devices and related software and storage media thereof.

### Background of the invention

Orthogonal frequency division multiplexing (OFDM) has been adopted in both wireline (e.g., Home Plug, G.hn, UPA) and wireless (3GPP LTE) standards for broadband communications. A problem of OFDM is its high peak-to-average power ratio (PAPR) but it is attractive due to its efficient spectrum utilization and high flexibility as coding, constellation and power allocation can be adaptively controlled per subcarrier according to user requirements and/or channel changes. Single carrier with frequency domain equalization (SC-FDE) has also been used in uplink 3GPP LTE-A standard due to the lower PAPR, but adaptive modulation as in OFDM is not possible in this case. Time division multiplexing with CDMA (TD-CDMA) suitable for synchronous and asynchronous transmission was considered. However, the scheme was not able to exploit the advanced equalization in the frequency domain. Further a scheme based on OFDM combined with TDM has been presented to reduce the high PAPR while exploiting the benefit of the multipath propagation through FDE. Furthermore, several other schemes (i.e., COFDM, MC-CDMA) have been proposed to exploit benefit of these two extreme cases. To enhance the performance of OFDM or SC networks recently network coding (NC) has been considered in order to allow simple coding capability at relaying nodes, in exchange for network capacity gain. The relay uses logical operations to map received signal into a digital bit stream, so that the interference becomes a part of the arithmetic operation in network coding. Also analog network coding (ANC) has been presented. Such schemes has the disadvantage that typically channel conditions vary over time. A solution to this problem is to use transmission schemes with diversity such as multiple-input multiple-output (MIMO) but such schemes have limitations with respect to the size and implementation of the device.

In US2011/0110288 a method of operating a wireless communication system is proposed in which a transmission mode is to be selected out of plural transmission modes for transmitting plural entities, over a radio interface, to a receiving node. One of the plural transmission modes comprises network-combining the plural entities at a bit level into one or plural network-combined output entities.

In US2010/0098045, a communication apparatus communicates with a receiving apparatus which receives, combines and decodes firs and second data sections as part of a coded data block. The communication apparatus includes a controller that controls the ratio of how much part of the second data section overlaps with the first data section according to a difference of communication quality between resources used to transmit the first data section and resources used to transmit the second data section.

In US2009/0252146 a method for continuous network coding is proposes, wherein a relay sends probability data comprising a continuous number for use as parity data. A node receives streams of bits sent from sources towards a destination, and computes the probability data based on current noise and/or fading data. A selected set of the bits (all or some subset thereof) are combined e.g. applying a bitwise XOR.

### Summary

It is an object of embodiments of the invention to improve the reliability and consequently improved end user quality of experience in the transmission of signals between at least one first node and at least one second node via at least one intermediate node (relay), especially in the case of time varying or fading channels, e.g. for home users in power line communication relay systems although the invention is not limited thereto, while staying with reasonable device sizes and implementation complexity.

Embodiments of the invention are based *inter alia* on the inventive insight that, to improve the reliability in a transmission method, logically implemented at MAC/LLC and software supported, for transmission of signals between at least one first node and at least one second node via at least one intermediate node (relay), logic may be introduced at the intermediate node or relay with options to select more robust transmission modes depending on the channel conditions: if the channel condition is bad the more robust diversity scheme is selected depending on the level of fades, to thereby increase transmission reliability by relay pre-processing as a combination of symbol interleaving in the frequency domain at the relay and equalization at the second node or receiver to exploit the channel frequency diversity. An advantage of embodiments is enablement of frequency diversity amongst others in bi-directional traffic flows over the same bandwidth between two or more end users and especially adapted for bi-directional relaying with network coding.

The scope of the invention is defined by the appended claims.

### Brief description of the figures

The accompanying drawings are used to illustrate presently preferred non-limiting exemplary embodiments of devices of the present invention. The above and other advantages of the features and objects of the invention will become more apparent and the invention will be better understood from the following detailed description when read in conjunction with the accompanying drawings, in which:
Figure 1 shows in the top part a two-slot protocol concept and in the bottom part a time slot representation typical in ANC communication protocols in which embodiments of the invention can be used.
Figure 2 shows an embodiment of an entire system of the invention with the transmitting first node, the intermediate relay node and the receiving second node, as well as, as a fourth node, a management center.
Figure 3 shows the two relay signal protocols as used in a two signal concatenation embodiment in accordance with the invention.
Figure 4 shows a portion of the receiving second node with equalizing and de-interleaving capability at a size 2N while N size signals are transmitted by the first node in accordance with an embodiment of the invention.
Figure 5 shows another portion of the receiving second node in accordance with an embodiment of the invention - more in particular a conventional OFDM receiver, with optionally also equalization filtering - either used directly on received signals or operable on the output of the portion described in Figure 4.
Figure 6 shows the BER performance in case of point to point communications over a multipath frequency selective channel, to thereby demonstrate an achievement of embodiments of the invention, in particular when MMSE equalization is used in the portion of Figure 4.
Figure 7 shows a basic transmission approach of embodiments, organizing transmission over a channel between a first node to a second node over an intermediate third node.
Figure 8 shows the structure of an embodiment of the first, second and third node.
Figure 9 shows the structure of the first, second and third node in accordance with an embodiment of the invention.

### Description of embodiments

Embodiments of the invention relate to devices suitable for use in a transmission method for transmission of signals between at least one first node and at least one second node via at least one intermediate third node, the related transmission method in general and the encompassing system and the parts of the method executed on said devices and related software and storage media thereof. The scheme of embodiments of the invention is based on the assumption that channel information is available by channel estimation (CE) or otherwise. In an embodiment the channel estimation is performed by a center management or fourth node and the outcome thereof is provided to the intermediate third node or relay. An alternative embodiment wherein the relay is provided with circuitry for performing channel estimation is equally possible.

In an embodiment of the invention the relay can work in a plurality of transmission modes of which a first mode is conventional where the signal received is simply broadcasted later. In this case, preferably a guard interval (GI) is added between each of the signals. There is at least one further second mode, triggered by the channel information (possibly provided by the management center or otherwise determined) if poor channel link(s) is(are) estimated. In the second mode the relay concatenates the signals received and preferably adds a common GI at the beginning of the frame. As an option, before broadcasting, the relay may perform the signal equalization to remove the effect of channel multipath.

In an embodiment the transmission scheme and hence the transmitting first node and receiving second node may be based on block processing of size N, and the intermediate node and receiving node may be adapted to operate also on block sizes being a multiple of N. In typical embodiments, at said intermediate third node (30), the following is performed: selecting (230), depending on an acquired channel condition (50), as transmission mode (60) either (a) transmitting (240) from said intermediate third node said plurality of signals to said second node (20) in a conventional way; or (b) performing the steps of: (i) concatenating (250) said plurality of signals as received; (ii) transmitting (260) from said intermediate third node said concatenated signal (120) to said second node (20), hence operating in a non-conventional way. Further at said second node (20) the following may be performed: performing (290) depending on said acquired transmission mode (60), either (a) equalizing and demodulating (300) said plurality of signals as received in a conventional way; or (b) performing the steps of: (i) equalizing (310) of said concatenated signal (120); and (ii) de-combining (320) of said equalized concatenated signal (120) and further demodulating (330) the obtained de-combined signals to thereby obtain said plurality of signals.

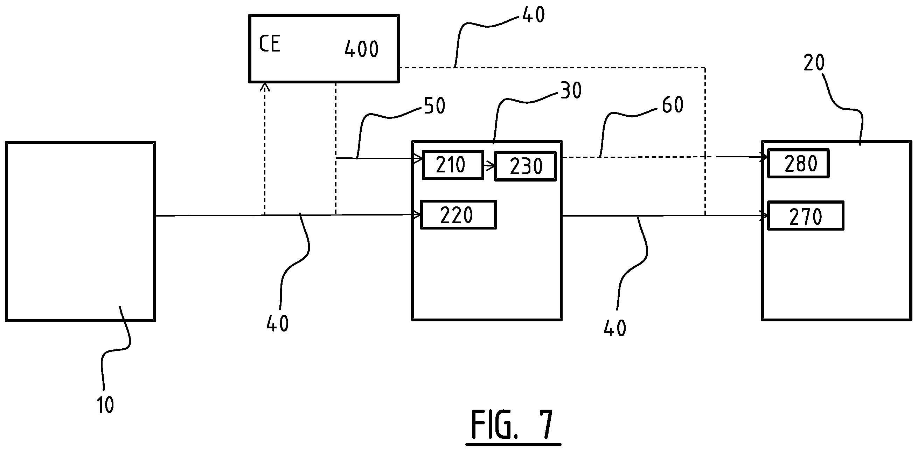

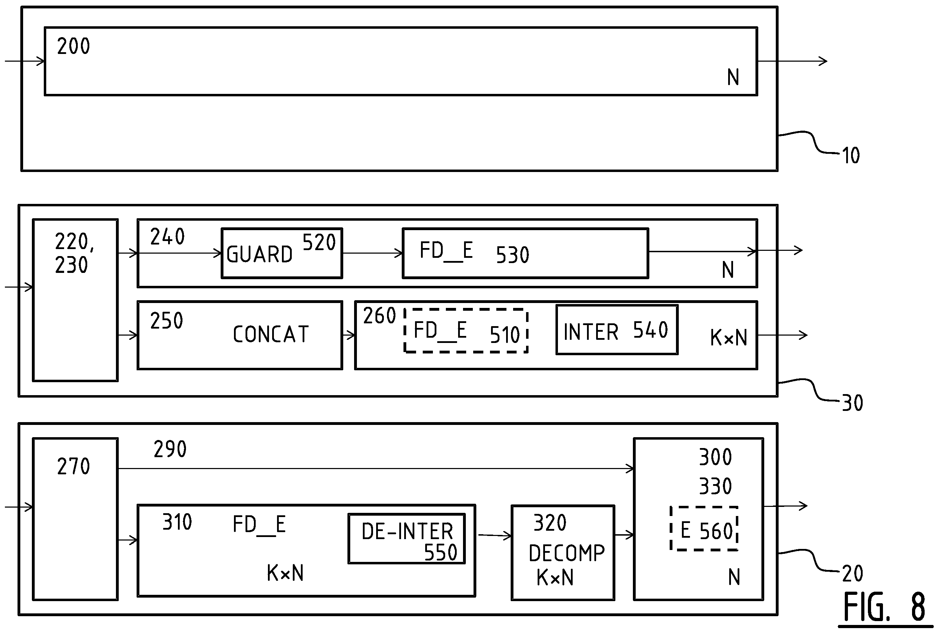

Figure 7 shows an embodiment of a basic transmission approach organizing transmission over a channel (40) between a first node (10) to a second node (20) over an intermediate third node (30) with or without support of the fourth node (40), capable for performing channel estimation (400) to find channel information (50), or alternatively the third node has such capability itself. The third node selects a transmission mode based on the channel info. The second node is equipped with circuitry to detect the transmission mode, either by measuring the incoming signal (its size) or by performing also channel estimation or by assistance of the fourth node. Both the intermediate node and second node are provided with circuitry (220) (270) respectively for receiving signals. Figure 8 shows the structure of the first (10), second (20) and third (30) node, in particular the block processing for size N in all of those, complemented in the second and third node with portions capable of performing block processing of size K*N, K being the number of signals concatenated.

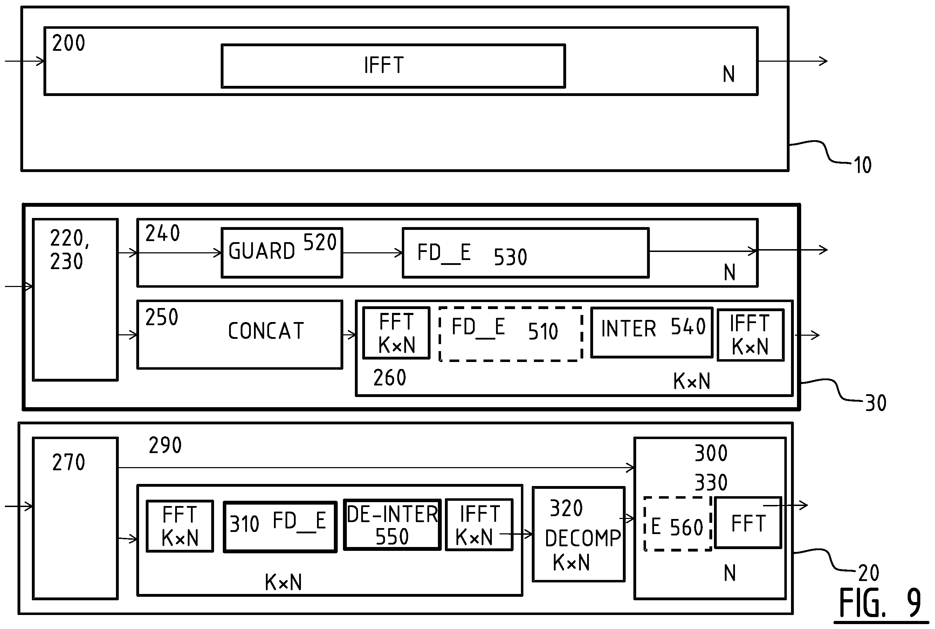

Figure 9 shows a more detailed embodiment using IFFT and FFT operations. Note that for each block either specialized circuitry or hardware can be used or the steps represented can be executed under software control by more generic circuitry or a mix thereof can be used. Embodiments disclose a transmission method, for transmission of signals between at least one first node (10) and at least one second node (20) via at least one intermediate third node (30), said nodes being part of a transmission channel (40), comprising the steps of transmitting (200) from said at least one first node (10) a plurality of signals one after another; acquiring (210) at said intermediate third node (30) the channel condition (50) of the transmission channel (40); receiving (220) at said intermediate third node (30) said plurality of signals as received; selecting (230) at said intermediate third node (30), depending on said acquired channel condition (50), as transmission mode (60) either transmitting (240) from said intermediate third node said plurality of signals to said second node (20) (optionally after performing a further step of equalizing (530)); or performing the steps of: concatenating (250) said plurality of signals as received; and transmitting (260) from said intermediate third node said concatenated signal (120) to said second node (20) (optionally after performing a further step of equalizing (510)); and further receiving (270) at said second node (20) either said plurality of signals or said concatenated signal (120); acquiring (280) at said second node (20) the selected transmission mode (60); performing (290) at said second node (20), depending on said acquired transmission mode (60), either optionally equalizing (560) and demodulating (300) said plurality of signals as received; or performing the steps of: optionally equalizing (310) of said concatenated signal (120); and de-combining (320) of said optionally equalized concatenated signal (120) and further demodulating (330) the obtained de-combined signals to thereby obtain said plurality of signals. In an embodiment the step of equalizing (560) is only present if no equalizing in the intermediate node (30) is present.

In an embodiment the acquiring (210) at said intermediate third node (30) of the channel condition (50) of the transmission channel (40) comprises the steps of: performing (400) channel estimation at a fourth node (40); and providing the outcome of said channel estimation to said intermediate third node (30), and optionally also to the second node. Alternatively the acquiring (210) at said intermediate third node (30) of the channel condition (50) of the transmission channel (40) comprises the step of performing (400) channel estimation at said intermediate third node (30) itself. In yet another alternative the acquiring (280) at said second node (20) the selected transmission mode (60)) comprises the steps of determining (410) the size of the concatenated signal (120) as received at said second node (20) and deriving therefrom said selected transmission mode (60).

In an embodiment the acquiring (280) at said second node (20) the selected transmission mode (60) comprises the steps of performing (420) channel estimation at said second node (20) and deriving therefrom said selected transmission mode (60). Alternatively the acquiring (280) at said second node (20) of the selected transmission mode (60) comprises the steps of receiving the selected transmission mode (60) from said fourth node (40). In yet another alternative the acquiring (280) at said second node (20) the selected transmission mode (60) comprises the steps of receiving the selected transmission mode (60) from said intermediate third node (30).

In an embodiment of the invention the transmitting (200) from said first node (10) of said plurality of signals, the transmitting (240) from said intermediate third node of said plurality of signals to said second node (20), the equalizing and demodulating (300) said plurality of signals as received at said second node (20) and the further demodulating (330) the obtained de-combined signals are based on a block processing method with block of size N. In a further example said block processing method is OFDM.

In an embodiment of the invention said transmitting (240) from said intermediate third node said plurality of signals as received to said second node (20) comprises the step of adding (520) a guard interval (GI) in between each transmission of such signal; while said concatenating (250) said plurality of signals as received is without any guard interval in between those signals.

In an embodiment of the invention said transmitting (240) from said intermediate third node of said plurality of signals to said second node (20) comprising the step of performing (530) a frequency domain equalization.

In an embodiment of the invention the step of transmitting (260) from said intermediate third node said concatenated signal (120) to said second node (20) and the step of equalizing (310) of said concatenated signal (120) is based on block processing of size N multiplied by the amount of signals in said concatenated signal (120). A further embodiment further comprises the step of size N multiplied by the amount of signals in said concatenated signal (120) equalization (530) at the intermediate third node (30).

An embodiment of the invention comprises the step of size N multiplied by the amount of signals in said concatenated signal (120) interleaving (540) at the intermediate third node (30) and de-interleaving (550) at the second node (20). In a further embodiment the step of equalizing (310) of said concatenated signal (120) is based on an MMSE equalizer.

In an embodiment of the invention, in between de-combining (320) of said equalized concatenated signal (120) and further demodulating (330) the obtained de-combined signals, a further step of equalization (560) is performed.

An embodiment of the device or intermediate node further comprises one or more of the following circuitry: circuitry for performing (400) channel estimation at said intermediate third node (30) itself; circuitry active in a first transmission mode being adapted for block processing with block of size N; circuitry active in a first transmission mode being adapted for adding (520) a guard interval in between each transmission of such signal; circuitry active in a first transmission mode being adapted for performing (530) a frequency domain equalization.

An embodiment of the device or second node comprises one or more of the following circuitry: circuitry for determining (410) the size of the concatenated signal (120) as received at said second node (20) and deriving therefrom said selected transmission mode (60); circuitry for performing (420) channel estimation at said second node (20) and deriving therefrom said selected transmission mode (60); circuitry for receiving the selected transmission mode (60); the circuitry for the equalizing and demodulating (300) said plurality of signals as received at said second node (20) and further demodulating (330) the obtained de-combined signals being adapted for block processing method with block of size N.

An embodiment the invention is further demonstrated by use of Orthogonal Frequency Division Multiplexing (OFDM) but is applicable to all kinds of telecommunication methods using one or another form of block processing. While also demonstrated in the context of power line, hence wired communication, the approach is equally applicable for wireless communication also. Further the invention is discussed in the context of bi-directional communication but is equally applicable for unidirectional communication. This embodiment is illustrated by using two slots but can easily be extended to more than two slots.

In the illustrated embodiments the plurality of signals comprises two signals received in two consecutive time slots from the same first node. In alternative embodiments, the two signals may be received from different first nodes in consecutive time slots.

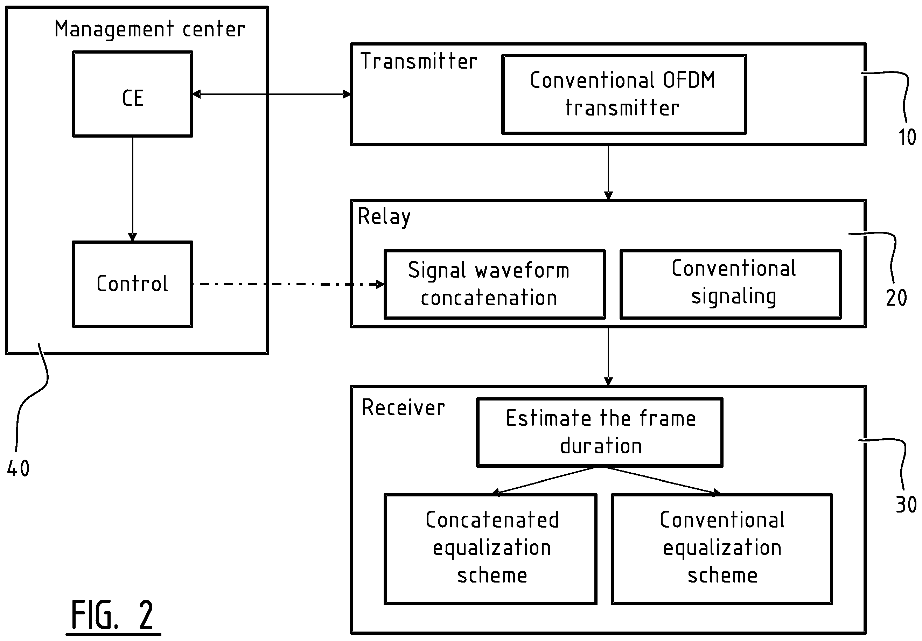

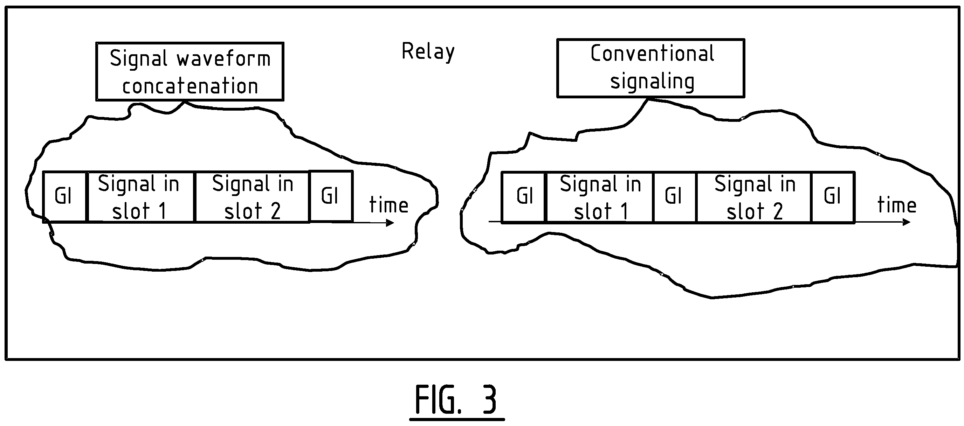

An embodiment of a system of the invention is illustrated in figure 2. The scheme is based on the assumption that channel estimation (CE) is done prior to the data signaling mode. This is a reasonable assumption since CE is usually done prior to data signaling (and also in some standards the pilots are inserted on reserved subcarriers). The management center performs CE for all links and calculates the SNR for each of the user-relay pair. The relay can work in two modes as illustrated in figure 3. The first mode is a conventional transmission mode where the signal received in the first time slot is simply broadcasted during the second time slot. In this case, the guard interval (GI) is added between each of the signals. A second transmission mode is triggered by a management center if (a) poor channel link(s) is(are) estimated, i.e. if all or a part of the transmission channel from the first node to the second node via the third node is having poor transmission qualities. In the second transmission mode the relay concatenates the signals received in the first and second time slot and adds a common GI at the beginning of the frame. As an option, before broadcasting, the relay may perform the signal equalization to remove channel multipath effects.

Note that each standard has different transmission configurations: reconfigurable OFDM transceiver with respect to a number subcarriers and their separation (i.e. bandwidth). For example in ITU G.hn the system can use different frequency bands, number of subcarriers and their separation. Thus transceivers are able to change their FFT/IFFT size upon request.

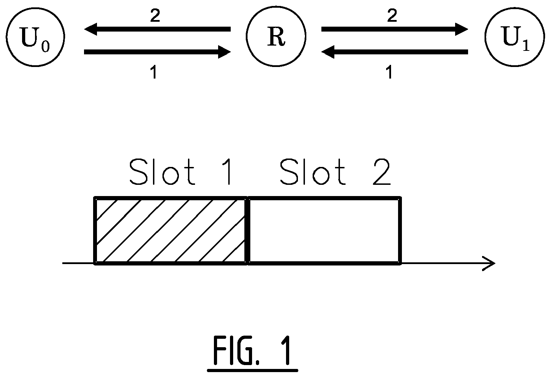

Below we only describe a detailed embodiment of the second transmission mode since the first transmission mode may be conventional OFDM relaying with ANC, as described in "Haris Gacanin and Fumiyuki Adachi, Broadband Analog Network Coding, IEEE Tran. on Wireless Communications, Vol. 9, No. 5, May 2010" for wireless applications, and in European patent application with publication number EP 2525533 in the name of the Applicant, for wire-line applications. The broadband analog network coding (ANC) in a wireless channel is essentially another variation of PNC with a simpler implementation. In EP 2525533 a bi-directional communication based on ANC was proposed for in-house networks over power line channels. The communication protocol is illustrated in figure 1 thereof, where two devices exchange data in two time slots over the same frequency band. In those prior art documents it was assumed that both channels in the first and second time slots undergo the same attenuation. However in power line (as well as in wireless) communication systems, most of the time channel conditions do not undergo the same attenuation. For example the channels between the users and the relay in the first time slot may be faded, while in the second time slot they may be good (or vice versa). Thus, due to one attenuated segment, the signal at the received end may have a poor signal-to-noise ratio (SNR). In embodiments of the invention this problem may be addressed by introducing a second transmission mode.

In a first stage data (N-point OFDM) signals are transmitted from two users A and B to the relay. Both signals reach the relay in the same time and their signal waveforms are superimposed at the relay's interface (power line or antenna). Since the channel information is available at each of the nodes the relay is informed about the channel conditions in the first and second time slot. In the case that the corresponding SNR(s) is(are) low, the relay is working in the second transmission mode. Thus, the relay stores the signal (two superimposed signals from user A and B received in the first slot and wait for the second signal (again two new superimposed signals from user A and B in the second signaling interval. Note that it is also possible that the first and/or the second signal is composed of a signal received form one user.

In a second stage, after the relay has received the second signal, the relay performs 2N-point FFT over the concatenated signal from the first and second signaling time intervals. Note that time-domain filtering can also be assumed at the relay to reduce discontinuity of the signals from the first and second slots. However, this will cause a slight bit error rate degradation as a function of the filter's roll-off factor. Then, frequency domain interleaving is performed over 2N frequency components. Note that the term "subcarrier" is in fact not anymore proper since FFT operation will introduce a correlation between each of the 2N samples, i.e. the N subcarriers in each of the signals are not anymore independent. After the interleaving 2N point IFFT is applied to convert the interleaved signal into the time domain.

In a third stage, in the following two signaling intervals the interleaved signals are broadcasted in the following two time slots. Note that the GI at the relay is inserted over two consecutive OFDM signaling intervals (slots) before the signal is broadcasted as shown in figure 3. Note that this scheme operates in four time slots in comparison with a two-slot conventional ANC scheme that is shown in figure 1. In the conventional case within two time slots one signal is exchanged, while in the disclosed embodiment in four time slots two signals are exchanged. So the transmission efficiency is kept the same.

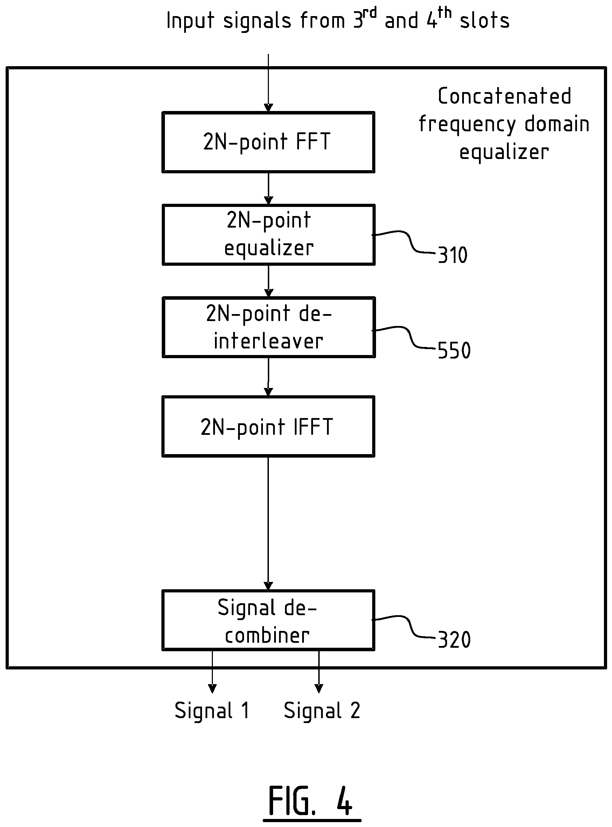

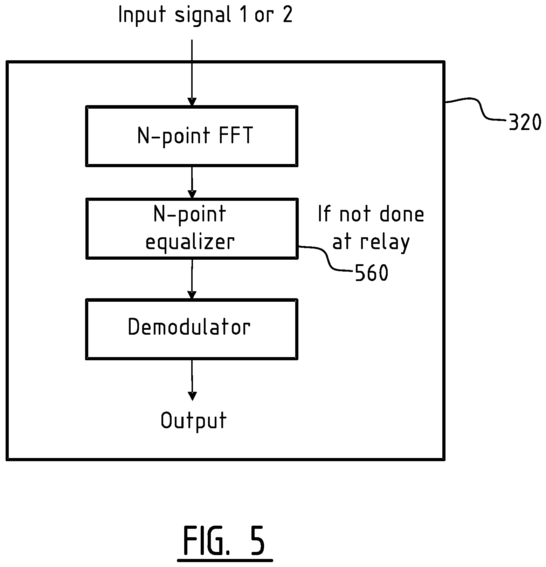

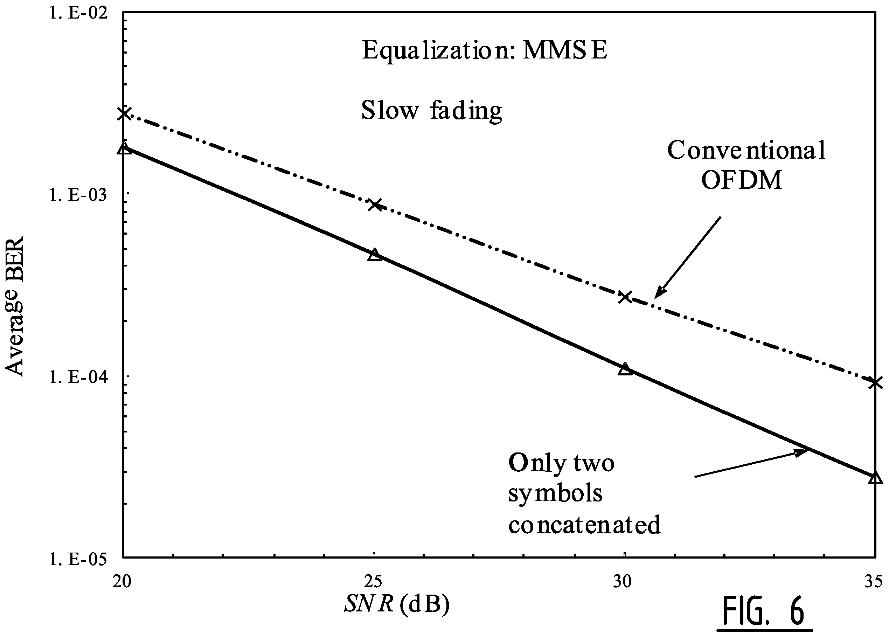

As illustrated in figure 2 the receiver, i.e. the second node estimates the frame duration and changes to the second mode if it is 2N samples in size. In this example we consider that only two received signals are concatenated, but from this example it is straightforward to consider more than two signals. The receiver's FFT is set to 2N-points and the concatenated signal is transformed into the frequency domain for equalization and de-interleaving. The OFDM equalization is done over 2N frequency components and then de-interleaving is performed to re-order the signal components before demodulation. In this way the frequency diversity due to multipath propagation can be exploited to improve the performance as shown in figure 6, where two symbols are concatenated and equalization is done via 2N-point FFT/IFFT by using minimum mean square error (MMSE) criteria. The de-interleaved signal is fed to 2N-point IFFT to convert the signal into its time-domain representation. Now, the two OFDM signals are separated in the time domain. Useful signal separation and demodulation by N-point FFT is performed on each of the separated OFDM signals as shown in figure 4. Equalization (simple one tap or more complex equalizers are applicable) is performed to remove the channel gains in the first and second links if the equalization with respect to the first link is not done at the relay. We note here that each of the equalized signals contains the useful (partner) signal as well as one self-interference signal. Next, the self-interference is removed from each of the two equalized signals. This is possible since each of the users knows its own transmitted signals. What remains are the two partner signals transmitted in the first and second time intervals that are processed by a conventional OFDM receiver which is shown in figure 5.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media.

The embodiments are also intended to cover computers programmed to perform said steps of the above-described methods.

The functions of the various elements shown in the figures, including any functional blocks labelled as "processors" or "modules", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Whilst the principles of the invention have been set out above in connection with specific embodiments, it is to be understood that this description is merely made by way of example and not as a limitation of the scope of protection which is determined by the appended claims.

## Claims

1. A method for use in the transmission of signals between at least one first node (10) and at least one second node (20) via at least one intermediate node (30), said nodes being part of a transmission channel (40), said method comprising at said intermediate node (30) the steps of:
receiving (200) a plurality of signals from said at least one first node;
acquiring (210) a channel quality condition (50) of the transmission channel (40);
selecting (230), depending on said acquired channel quality condition (50), as transmission mode (60) either
transmitting (240) said plurality of signals to said at least one second node (20); or performing the steps of:
concatenating (250) said plurality of signals as received to obtain a concatenated signal;
transmitting (260) said concatenated signal (120) to said second node (20);
**characterized in that** concatenating (250) comprises combining said plurality of signals as received and adding a guard interval at least at the beginning of the combination, without including a guard interval in between said plurality of signals.

2. A method for use in the transmission of signals between at least one first node (10) and a second node (20) via at least one intermediate node (30), said nodes being part of a transmission channel (40), said method comprising at said second node (20) the steps of:
receiving (270) from said intermediate node (30) either a plurality of signals, or a concatenated signal (120) comprising said plurality of signals;
acquiring (280) a selected transmission mode (60);
performing (290), depending on said acquired transmission mode (60), either optionally equalizing;
and demodulating (300) said plurality of signals; or performing the steps of:
optionally equalizing (310) of said concatenated signal (120); and
de-combining (320) of said optionally equalized concatenated signal (120) to obtain de-combined signals and demodulating (330) the obtained de-combined signals to obtain each of said plurality of signals;
**characterized in that** concatenating (250) comprises combining said plurality of signals as received and adding a guard interval at least at the beginning of the combination, without including a guard interval in between said plurality of signals.

3. A method for transmission of signals between at least one first node (10) and at least one second node (20) via at least one intermediate node (30), said nodes being part of a transmission channel (40), said method comprising the steps of:
transmitting (200) from said at least one first node (10) a plurality of signals one after another;
performing the method of claim 1; and thereafter performing the method of claim 2.

4. A device, suitable for operating as intermediate node (40) in transmission of signals between at least one first node (10) and at least one second node (20) via at least said intermediate third node (30), said nodes being part of a transmission channel (40), the device comprising
receiving circuitry for receiving (200) a plurality of signals from said at least one first node; acquiring circuitry for acquiring (210) the channel quality condition (50) of the transmission channel (40);
selecting circuitry for selecting (230), depending on said acquired channel quality condition (50), a transmission mode (60);
first transmitting circuitry configured for being active in a first selected transmission mode for transmitting (240) said plurality of signals to said at least one second node (20);
second transmitting circuitry configured for being active in a second selected transmission mode for performing the steps of:
concatenating (250) said plurality of signals to obtain a concatenated signal;
transmitting (260) said concatenated signal (120) to said second node (20);
**characterized in that** concatenating (250) comprises combining said plurality of signals as received and adding a guard interval at least at the beginning of the combination, without including a guard interval in between said plurality of signals.

5. The device of claim 4, wherein said second transmitting circuitry is adapted for block processing of size N multiplied by the amount of signals in said concatenated signal (120).

6. The device of claim 4 or 5, wherein said second transmitting circuitry is adapted for equalization of the concatenated signal (530).

7. The device of any one of the claims 4-6, wherein said second transmitting circuitry is adapted for interleaving (540) of the concatenated signal.

8. A device, suitable for operating as a second node (20) in transmission of signals between at least one first node (10) and the second node (20) via at least one intermediate node (30), said nodes being part of a transmission channel (40), the device comprising:
receiving circuitry for receiving (270) from said intermediate node (30) either a plurality of signals, or a concatenated signal (120) comprising said plurality of signals;
acquiring circuitry for acquiring (280) a selected transmission mode (60);
first demodulating circuitry configured for being active in a first acquired transmission mode (60) for optionally equalizing and for demodulating (300) each of said plurality of signals;
second demodulating circuitry configured for being active in a second acquired transmission mode for performing the steps of:
optionally equalizing (310) of said concatenated signal (120); and
de-combining (320) of said optionally equalized concatenated signal (120) to obtain de-combined signals and demodulating (330) the obtained de-combined signals to obtain each of said plurality of signals;
**characterized in that** said concatenated signal (120) comprises a combination of said plurality of signals as received and an added guard interval at least at the beginning of said combination, without an added guard interval in between said plurality of signals.

9. The device of claim 8, wherein the second demodulating circuitry is configured for operating based on block processing of size N multiplied by the amount of signals in said concatenated signal (120).

10. The device of claim 8 or 9, wherein the second demodulating circuitry is adapted for size N multiplied by the amount of signals in said concatenated signal (120) de-interleaving (550).

11. The device of any one of the claims 8-10, wherein the second demodulating circuitry comprises an MMSE equalizer.

12. A system comprising:
at least one first node (10) for transmitting (200) a plurality of signals one after another to at least one intermediate node (30);
the at least one intermediate node (30) comprising the device of any one of the claims 4-7; and
at least one second node (20) comprising the device of any one of the claims 8-11.

13. The system as in claim 12, further comprising:
channel estimation circuitry for performing (400) channel estimation and for providing the outcome of said channel estimation to the at least one intermediate node (30) and optionally to the at least one second node.

14. A computer program product, operable on a processing engine, for executing the steps of the methods of any one of the claims 1 or 2 or 3.

15. A non-transitory machine readable storage medium storing the computer program product of claim 14.

## Patentansprüche

1. Verfahren zur Verwendung bei der Übertragung von Signalen zwischen mindestens einem ersten Knoten (10) und mindestens einem zweiten Knoten (20) über mindestens einen Zwischenknoten (30), wobei die Knoten Teil eines Übertragungskanals (40) sind, wobei das Verfahren an dem Zwischenknoten (30) die folgenden Schritte umfasst:
Empfangen (200) mehrerer Signale von dem mindestens einen ersten Knoten;
Erfassen (210) einer Kanalqualitätsbedingung (50) des Übertragungskanals (40);
Auswählen (230), abhängig von der erfassten Kanalqualitätsbedingung (50), als Übertragungsmodus (60) entweder
Übertragen (240) der mehreren Signale zu dem mindestens einen zweiten Knoten (20); oder Durchführen der Schritte:
Verketten (250) der mehreren empfangenen Signale, um ein verkettetes Signal zu erhalten;
Übertragen (260) des verketteten Signals (120) an den zweiten Knoten (20); **dadurch gekennzeichnet, dass** das Verketten (250) das Kombinieren der mehreren empfangenen Signale und das Hinzufügen eines Schutzintervalls zumindest zu Beginn der Kombination umfasst, ohne ein Schutzintervall zwischen den mehreren Signalen einzuschließen.

2. Verfahren zur Verwendung bei der Übertragung von Signalen zwischen mindestens einem ersten Knoten (10) und einem zweiten Knoten (20) über mindestens einen Zwischenknoten (30), wobei die Knoten Teil eines Übertragungskanals (40) sind, wobei das Verfahren an dem zweiten Knoten (20) die folgenden Schritte umfasst:
Empfangen (270) von dem Zwischenknoten (30) entweder mehrerer Signale oder eines verketteten Signals (120), das die mehreren Signale umfasst;
Erfassen (280) eines ausgewählten Übertragungsmodus (60) ;
Durchführen (290), abhängig von dem erfassten Übertragungsmodus (60), entweder wahlweise Entzerren;
und Demodulieren (300) der mehreren Signale; oder
Durchführen der Schritte:
wahlweise Entzerren (310) des verketteten Signals (120); und Dekombinieren (320) des wahlweise entzerrten verketteten Signals (120), um dekombinierte Signale zu erhalten, und Demodulieren (330) der erhaltenen dekombinierten Signale, um jedes der mehreren Signale zu erhalten;
**dadurch gekennzeichnet, dass** das Verketten (250) das Kombinieren der Vielzahl von empfangenen Signalen und das Hinzufügen eines Schutzintervalls zumindest zu Beginn der Kombination umfasst, ohne ein Schutzintervall zwischen den mehreren Signalen einzubeziehen.

3. Verfahren zur Übertragung von Signalen zwischen mindestens einem ersten Knoten (10) und mindestens einem zweiten Knoten (20) über mindestens einen Zwischenknoten (30), wobei die Knoten Teil eines Übertragungskanals (40) sind, wobei das Verfahren die folgenden Schritte umfasst:
Übertragen (200) mehrerer Signale nacheinander von dem mindestens einen ersten Knoten (10);
Durchführen des Verfahrens nach Anspruch 1; und danach Durchführen des Verfahrens nach Anspruch 2.

4. Vorrichtung, geeignet zum Betrieb als Zwischenknoten (40) bei der Übertragung von Signalen zwischen mindestens einem ersten Knoten (10) und mindestens einem zweiten Knoten (20) über mindestens den Zwischenknoten (30), wobei die Knoten Teil eines Übertragungskanals (40) sind, wobei die Vorrichtung umfasst
Empfangsschaltung zum Empfangen (200) mehrerer Signale von dem mindestens einen ersten Knoten;
Erfassungsschaltung zum Erfassen (210) der Kanalqualitätsbedingung (50) des Übertragungskanals (40) ;
Auswahlschaltung zum Auswählen (230) eines Übertragungsmodus (60) in Abhängigkeit von der erfassten Kanalqualitätsbedingung (50);
erste Übertragungsschaltung, die ausgelegt ist, um in einem ersten ausgewählten Übertragungsmodus aktiv zu sein, um die mehreren Signale an den mindestens einen zweiten Knoten (20) zu übertragen (240);
zweite Übertragungsschaltung, die ausgelegt ist, um in einem zweiten ausgewählten Übertragungsmodus aktiv zu sein, um die folgenden Schritte auszuführen:
Verketten (250) der mehreren Signale, um ein verkettetes Signal zu erhalten; Übertragen (260) des verketteten Signals (120) zu dem zweiten Knoten (20);
**dadurch gekennzeichnet, dass** das Verketten (250) das Kombinieren der mehreren empfangenen Signale und das Hinzufügen eines Schutzintervalls mindestens zu Beginn der Kombination umfasst, ohne ein Schutzintervall zwischen den mehreren Signalen einzuschließen.

5. Vorrichtung nach Anspruch 4, wobei die zweite Übertragungsschaltung für die Blockverarbeitung von Größe N multipliziert mit der Anzahl der Signale in dem verketteten Signal (120) angepasst ist.

6. Vorrichtung nach Anspruch 4 oder 5, wobei die zweite Übertragungsschaltung zur Entzerrung des verketteten Signals (530) angepasst ist.

7. Vorrichtung nach einem der Ansprüche 4-6, wobei die zweite Übertragungsschaltung zum Verschachteln (540) des verketteten Signals angepasst ist.

8. Vorrichtung, geeignet zum Betreiben als zweiter Knoten (20) bei der Übertragung von Signalen zwischen mindestens einem ersten Knoten (10) und dem zweiten Knoten (20) über mindestens einen Zwischenknoten (30), wobei die Knoten Teil eines Übertragungskanals (40) sind, wobei die Vorrichtung umfasst:
Empfangsschaltung zum Empfangen (270) von dem Zwischenknoten (30) entweder von mehreren Signalen oder von einem verketteten Signal (120), das die mehreren Signale umfasst;
Erfassungsschaltung zum Erfassen (280) eines ausgewählten Übertragungsmodus (60);
eine erste Demodulationsschaltung, die ausgelegt ist, um in einem ersten erfassten Übertragungsmodus (60) aktiv zu sein, um wahlweise jedes der mehreren Signale zu entzerren und zu demodulieren (300); eine zweite Demodulationsschaltung, die ausgelegt ist, um in einem zweiten erfassten Übertragungsmodus aktiv zu sein, um die folgenden Schritte auszuführen:
wahlweise Entzerren (310) des verketteten Signals (120); und
Dekombinieren (320) des wahlweise entzerrten verketteten Signals (120), um dekombinierte Signale zu erhalten, und Demodulieren (330) der erhaltenen dekombinierten Signale, um jedes der mehreren Signale zu erhalten;
**dadurch gekennzeichnet, dass** das verkettete Signal (120) eine Kombination aus den mehreren empfangenen Signalen und einem zusätzlichen Schutzintervall zumindest zu Beginn der Kombination umfasst, ohne ein zusätzliches Schutzintervall zwischen den mehreren Signalen.

9. Vorrichtung nach Anspruch 8, wobei die zweite Demodulationsschaltung ausgelegt ist, um basierend auf der Blockverarbeitung der Größe N multipliziert mit der Anzahl der Signale in dem verketteten Signal (120) zu arbeiten.

10. Vorrichtung nach Anspruch 8 oder 9, wobei die zweite Demodulationsschaltung für Größe N angepasst ist, multipliziert mit der Anzahl der Signale in der Entschachtelung (550) der verketteten Signale (120).

11. Vorrichtung nach einem der Ansprüche 8-10, wobei die zweite Demodulationsschaltung einen MMSE-Equalizer umfasst.

12. System, umfassend:
mindestens einen ersten Knoten (10) zum Übertragen (200) mehrerer Signale nacheinander an mindestens einen Zwischenknoten (30);
wobei der mindestens eine Zwischenknoten (30) die Vorrichtung nach einem der Ansprüche 4-7 umfasst; und
mindestens einen zweiten Knoten (20), der die Vorrichtung nach einem der Ansprüche 8-11 umfasst.

13. System nach Anspruch 12, ferner umfassend:
Kanalschätzschaltung zum Durchführen einer (400) Kanalschätzung und zum Bereitstellen des Ergebnisses der Kanalschätzung an den mindestens einen Zwischenknoten (30) und wahlweise an den mindestens einen zweiten Knoten.

14. Computerprogrammprodukt, das auf einer Verarbeitungsmaschine zum Ausführen der Schritte der Verfahren nach einem der Ansprüche 1 oder 2 oder 3 betreibbar ist.

15. Nichtflüchtiges, maschinenlesbares Speichermedium, das das Computerprogrammprodukt nach Anspruch 14 speichert.

## Revendications

1. Procédé à utiliser pour la transmission de signaux entre au moins un premier noeud (10) et au moins un deuxième noeud (20) par l'intermédiaire d'au moins un noeud intermédiaire (30), lesdits noeuds faisant partie d'un canal de transmission (40), ledit procédé comprenant, au sein dudit noeud intermédiaire (30), les étapes de :
réception (200) d'une pluralité de signaux en provenance dudit au moins un premier noeud ;
acquisition (210) d'une condition de qualité de canal (50) du canal de transmission (40) ;
sélection (230), en fonction de ladite condition de qualité de canal acquise (50), en tant que mode de transmission (60), soit
la transmission (240) de ladite pluralité de signaux audit au moins un deuxième noeud (20) ; soit
l'exécution des étapes de :
concaténation (250) de ladite pluralité de signaux tels qu'ils sont reçus pour obtenir un signal concaténé ;
transmission (260) dudit signal concaténé (120) audit deuxième noeud (20) ;
**caractérisé en ce que** la concaténation (250) comprend la combinaison de ladite pluralité de signaux tels qu'il sont reçus et l'ajout d'un intervalle de garde au moins au commencement de la combinaison, sans inclure d'intervalle de garde entre ladite pluralité de signaux.

2. Procédé à utiliser pour la transmission de signaux entre au moins un premier noeud (10) et un deuxième noeud (20) par l'intermédiaire d'au moins un noeud intermédiaire (30), lesdits noeuds faisant partie d'un canal de transmission (40), ledit procédé comprenant, au sein dudit deuxième noeud (20), les étapes de :
réception (270), en provenance dudit noeud intermédiaire (30), soit d'une pluralité de signaux, soit d'un signal concaténé (120) comprenant ladite pluralité de signaux ;
acquisition (280) d'un mode de transmission sélectionné (60) ;
exécution (290), en fonction dudit mode de transmission acquis (60), soit
d'une égalisation facultative ;
et d'une démodulation (300) de ladite pluralité de signaux ; ou
d'une exécution des étapes de :
égalisation facultative (310) dudit signal concaténé (120) ; et
décombinaison (320) dudit signal concaténé facultativement égalisé (120) pour obtenir des signaux décombinés et démodulation (330) des signaux décombinés obtenus pour obtenir chacun de ladite pluralité de signaux ;
**caractérisé en ce que** la concaténation (250) comprend la combinaison de ladite pluralité de signaux tels qu'ils sont reçus et l'ajout d'un intervalle de garde au moins au commencement de la combinaison, sans inclure d'intervalle de garde entre ladite pluralité de signaux.

3. Procédé pour la transmission de signaux entre au moins un premier noeud (10) et au moins un deuxième noeud (20) par l'intermédiaire d'au moins un noeud intermédiaire (30), lesdits noeuds faisant partie d'un canal de transmission (40), ledit procédé comprenant les étapes de :
transmission (200) par ledit au moins un premier noeud (10) d'une pluralité de signaux l'un après l'autre ;
exécution du procédé selon la revendication 1 ; puis exécution du procédé selon la revendication 2.

4. Dispositif, approprié pour fonctionner en tant que noeud intermédiaire (40) pour la transmission de signaux entre au moins un premier noeud (10) et au moins un deuxième noeud (20) par l'intermédiaire d'au moins ledit troisième noeud intermédiaire (30), lesdits noeuds faisant partie d'un canal de transmission (40), le dispositif comprenant :
un circuit de réception pour recevoir (200) une pluralité de signaux en provenance dudit au moins un premier noeud ;
un circuit d'acquisition pour acquérir (210) la condition de qualité de canal (50) du canal de transmission (40) ;
un circuit de sélection pour sélectionner (230) un mode de transmission (60), en fonction de ladite condition de qualité de canal acquise (50) ;
un premier circuit de transmission configuré pour être actif dans un premier mode de transmission sélectionné pour la transmission (240) de ladite pluralité de signaux audit au moins un deuxième noeud (20) ;
un deuxième circuit de transmission configuré pour être actif dans un deuxième mode de transmission sélectionné pour l'exécution des étapes de :
concaténation (250) de ladite pluralité de signaux pour obtenir un signal concaténé ;
transmission (260) dudit signal concaténé (120) audit deuxième noeud (20) ;
**caractérisé en ce que** la concaténation (250) comprend la combinaison de ladite pluralité de signaux tels qu'il sont reçus et l'ajout d'un intervalle de garde au moins au commencement de la combinaison, sans inclure d'intervalle de garde entre ladite pluralité de signaux.

5. Dispositif selon la revendication 4, dans lequel ledit deuxième circuit de transmission est conçu pour un réaliser un traitement par blocs de taille N multiplié par la quantité de signaux dans ledit signal concaténé (120) .

6. Dispositif selon la revendication 4 ou 5, dans lequel ledit deuxième circuit de transmission est conçu pour réaliser une égalisation du signal concaténé (530).

7. Dispositif selon l'une quelconque des revendications 4 à 6, dans lequel ledit deuxième circuit de transmission est conçu pour réaliser un entrelacement (540) du signal concaténé.

8. Dispositif, approprié pour fonctionner en tant que deuxième noeud (20) pour la transmission de signaux entre au moins un premier noeud (10) et le deuxième noeud (20) par l'intermédiaire d'au moins un noeud intermédiaire (30), lesdits noeuds faisant partie d'un canal de transmission (40), le dispositif comprenant :
un circuit de réception pour recevoir (270), en provenance dudit noeud intermédiaire (30), soit une pluralité de signaux, soit un signal concaténé (120) comprenant ladite pluralité de signaux ;
un circuit d'acquisition pour acquérir (280) un mode de transmission sélectionné (60) ;
un premier circuit de démodulation configuré pour être actif dans un premier mode de transmission acquis (60) pour facultativement égaliser et pour démoduler (300) chacun de ladite pluralité de signaux ;
un deuxième circuit de démodulation configuré pour être actif dans un deuxième mode de transmission acquis pour l'exécution des étapes de :
égalisation facultative (310) dudit signal concaténé (120) ; et
décombinaison (320) dudit signal concaténé facultativement égalisé (120) pour obtenir des signaux décombinés et démodulation (330) des signaux décombinés obtenus pour obtenir chacun de ladite pluralité de signaux ;
**caractérisé en ce que** ledit signal concaténé (120) comprend une combinaison de ladite pluralité de signaux tels qu'ils sont reçus et d'un intervalle de garde ajouté au moins au commencement de ladite combinaison, sans qu'un intervalle de garde soit ajouté entre ladite pluralité de signaux.

9. Dispositif selon la revendication 8, dans lequel le deuxième circuit de démodulation est configuré pour fonctionner selon un traitement par blocs de taille N multiplié par la quantité de signaux dans ledit signal concaténé (120).

10. Dispositif selon la revendication 8 ou 9, dans lequel le deuxième circuit de démodulation est configuré pour réaliser un désentrelacement (550) de taille N multiplié par la quantité de signaux dans ledit signal concaténé (120).

11. Dispositif selon l'une quelconque des revendications 8 à 10, dans lequel le deuxième circuit de démodulation comprend un égaliseur EQMM.

12. Système comprenant :
au moins un premier noeud (10) pour la transmission (200) d'une pluralité de signaux, l'un après l'autre, à au moins un noeud intermédiaire (30) ;
l'au moins un noeud intermédiaire (30) comprenant le dispositif selon l'une quelconque des revendications 4 à 7 ; et
au moins un deuxième noeud (20) comprenant le dispositif selon l'une quelconque des revendications 8 à 11.

13. Système selon la revendication 12, comprenant en outre :
un circuit d'estimation de canal pour exécuter (400) une estimation de canal et pour fournir le résultat de ladite estimation de canal à l'au moins un noeud intermédiaire (30) et éventuellement à l'au moins un deuxième noeud.

14. Produit de programme informatique, exécutable sur un moteur de traitement, pour l'exécution des étapes des procédés selon l'une quelconque des revendications 1 ou 2 ou 3.

15. Support de stockage non transitoire lisible par une machine, stockant le produit de programme informatique selon la revendication 14.
